# EUROPÄISCHE PATENTSCHRIFT

(11) **EP 0 531 907 B1**
(45) Veröffentlichungstag und Bekanntmachung des Hinweises auf die Patenterteilung: **22.11.1995**
(21) Anmeldenummer: 92115211.2
(22) Anmeldetag: 05.09.1992
(51) Int. Cl.: B65D 88/12

(54) **Wechselbehälter**
Interchangeable container
Benne interchangeable

(30) Priorität: 07.09.1991 DE 4129862
(43) Veröffentlichungstag der Anmeldung: 17.03.1993
(73) Patentinhaber: Kreuzer, Jörg, Dipl.-Volkswirt, D-53819 Neunkirchen-Seelscheid (DE); Sistig, Kurt, Dipl.-Ing., D-53804 Much (DE)
(72) Erfinder: Kreuzer, Jörg, Dipl.-Volkswirt, D-53819 Neunkirchen-Seelscheid (DE); Sistig, Kurt, Dipl.-Ing., D-53804 Much (DE)
(74) Vertreter: Nau, Walter, Dipl.-Ing.

(56) Entgegenhaltungen:
- DE-A- 3 805 375
- GB-A- 2 097 751

## Beschreibung

Das folgende betrifft einen Wechslbehälter mit einem Laderaum und zumindest einer Vorrichtung zum Angreifen einer Aufnahmeeinrichtung.

Derartige Wechselbehälter sind allgemein bekannt und werden in vielfältiger Weise benutzt. So werden sie beispielsweise zum Abtransport von Schutt oder Erde eingesetzt, auch aber zum Sammeln von beispielsweise Metallabfällen, die in geeigneter Weise verwertet werden. Im allgemeinen werden die Wechselbehälter von einem Fahrzeug, das mit einer entsprechenden Aufnahmevorrichtung ausgestattet ist, zu dem Einsatzort transportiert, dort abgesetzt und nach Bedarf wieder abgeholt. Dabei kommt es immer wieder vor, daß Wechselbehälter von nicht Berechtigten entleert (beispielsweise bei in dem Wechselbehälter gesammelten wertvollen Metallen) oder abtransportiert werden.

Aus der GB-A- 2 097 751 ist ein Wechselbehälter bekannt, bei dem die Vorrichtung zum Angreifen einer Aufnahmeeinrichtung abnehmbar ist. Diese Einrichtung hat aber mehrere Nachteile. Ein gravierender sicherheitstechnischer Nachteil ist, daß bei einer nicht vorschriffsmäßigen Anbringung der entsprechenden abnehmbaren Vorrichtung ein Abgleiten dieser Vorrichtung während des Anhebens des Wechselbehälters möglich ist. Damit ist ein erhebliches Unfallrisiko unter anderem für das Bedienpersonal verbunden. Weiterhin stellt die abnehmbare Vorrichtung auch keinen vollwirksamen Diebstahlschutz dar, da entsprechende abnehmbare Vorrichtungen entweder nachgefertigt werden können oder auch unter Umständen von dem Hersteller des Wechselbehälters, der ja nicht nur an einen einzigen Kunden liefern wird, erworben werden können.

Der Erfindung liegt die Aufgabe zugrunde, eine Einrichtung bereitzustellen, mit der ein Wechselbehälter gegen unberechtigten Zugriff sicherbar ist, wobei die Zugriffssicherung ohne großen Aufwand an serienmäßigen Wechselbehältern anbringbar sein soll.

Diese Aufgabe wird dadurch gelöst, daß die Vorrichtung zum Angreifen einer Aufnahmeeinrichtung mit einer die Anbringung der Aufnahmeeinrichtung verhindernden Sperrvorrichtung versehen ist, wobei diese Sperrvorrichtung abnehmbar ist. Damit ist es für Nichtberechtigte nicht oder nur mit großem Aufwand möglich, einen derartig gesicherten Wechselbehälter zu entleeren oder zu entwenden.

In Weiterbildung ist die Sperrvorrichtung eine Abdeckhaube, mit der die Vorrichtung zum Angreifen der Aufnahmeeinrichtung abdeckbar ist. Eine derartige Abdeckhaube ist kostengünstig herstellbar und stellt einen wirksamen Schutz dar.

In weiterer Ausgestaltung ist die Sperrvorrichtung ein Sicherungsbügel, der an der Vorrichtung befestigt wird, so daß die Aufnahmeeinrichtung nicht befestigt werden kann. Ein solcher Sicherungsbügel stellt einen in gleicher Weise wirksamen Schutz dar, der ohne jede Veränderung oder Modifizierung des Wechselbehälters anbringbar ist und bei Nichtgebrauch platzsparend in dem Fahrzeug ablegbar ist.

Schließlich kann die Sperrvorrichtung als Sicherungsmanschette ausgebildet sein, die an der Vorrichtung anlegbar ist. Diese Ausbildung ist insbesondere bei größeren Vorrichtungen anwendbar.

In Weiterbildung der Erfindung ist die Sperrvorrichtung als über zumindest eine als Aufnahmebolzen ausgebildete Vorrichtung eines als Absetzkippbehälters ausgebildeten Wechselbehälters oder über eine als Aufnahmebügel ausgebildete Vorrichtung eines als Abrollbehälters ausgebildeten Wechselbehälters schiebbare Abdeckhaube ausgebildet. Dabei kann die Abdeckhaube mit einem Schloß an einer an dem Absetz-Kippbehälter bzw. dem Abrollbhälter angeschweißten Lasche befestigt werden. Alternativ ist es auch vorgesehen, die Abdeckhaube beispielsweise mit einer Klappe zu versehen, die nach dem Aufschieben auf den Aufnahmebolzen oder den Aufnahmebügel so mit einem Schloß gesichert wird, daß ein Entfernen der Abdeckhaube nicht möglich ist.

In weiterer Ausgestaltung der Erfindung ist die Sperrvorrichtung als zumindest dem zylindrischen Teil des Aufnahmebolzens umgreifender Sicherungsbügel ausgebildet. Dabei ist der Sicherungsbügel vorteilhaft so geformt, daß die Aufnahmeeinrichtung auch nicht mit einem Hilfsmittel (Kette, Seil) um den Aufnahmebolzen bzw. den Sicherungsbügel gelegt werden kann. Dies wird beispielsweise dadurch erreicht, daß der Sicherungsbügel kegelstumpfförmig ausgebildet ist, so daß um ihn herumgelegte Hilfsmittel von ihm abrutschen.

Der Sicherungsbügel weist zwei eine zumindest angenähert kreisförmige Öffnung einschließende Schenkel auf, die an jeweils einem Schenkelende bewegbar unlösbar verbunden und an den gegenüberliegenden Schenkelenden lösbar miteinander verbindbar sind. Dabei sind die lösbaren Schenkelenden in Weiterbildung mit einem Schloß verbindbar. Denkbar ist aber auch, daß die lösbaren Schenkelenden zusätzlich oder alternativ an einer an dem Absetz-Kippbehälter angeschweißten Lasche mit einem Schloß befestigt werden. Dabei reicht es im allgemeinen, einen derartigen Sicherungsbügel an einem Aufnahmebolzen anzubringen. Das Anbringen bzw. das berechtigte Lösen bedeutet keinen nennenswerten Zeitaufwand und der Sicherungsbügel kann bei Nichtgebrauch mit sehr geringem Platzbedarf in dem Transportfahrzeug abgelegt werden.

In Weiterbildung der Erfindung ist die Sperrvorrichtung als an die Form der als Aufnahmebügel ausgebildeten Vorrichtung des als Abrollbehälters ausgebildeten Wechselbehälters angepaßte Sicherungsmanschette gefertigt. Dadurch wird verhindert, daß der Fang- bzw. Zughaken der Aufnahmevorrichtung den Aufnahmebügel umfassen bzw. in den Aufnahmebügel eingreifen kann. Dabei weist in weiterer Ausgestaltung die Sicherungsmanschette einen schwenkbaren Befestigungsbügel auf, der den Aufnahmebügel umgreift. Der Befestigungsbügel ist wiederum mit einem Schloß sicherbar. Gegebenenfalls ist es erfindungsgemäß auch vorgesehen, die zwischen dem Aufnahmebügel und dem Abrollbehälter gebildete Öffnung beispielsweise durch eine an die Schutzmanschette angeschweißte Platte derart zu verschließen, daß kein Hilfsmittel (Seil, Kette) um den mit einer Schutzmanschette gesicherten Aufnahmebügel gelegt wird, an dem dann der Fang- bzw. Zughaken befestigt wird.

Weitere vorteilhafte Ausgestaltungen der Erfindung sind der Zeichnungsbeschreibung zu entnehmen, in der in den Figuren dargestellte Ausführungsbeispiele beschrieben sind. Es zeigen:
- Fig. 1: einen Absetz-Kippbehälter mit einer Abdeckhaube über einen Aufnahmebolzen,
- Fig. 2: einen Absetz-Kippbehälter mit einer Abdeckhaube über zwei Aufnahmebolzen,
- Fig. 3: einen Schnitt durch eine über einen Aufnahmebolzen geschobene Abdeckhaube,
- Fig. 4: einen aufgeschwenkten Sicherungsbügel,
- Fig. 5: einen um einen Aufnahmebolzen gelegten Sicherungsbügel,
- Fig. 6: einen mit einem Steckschloß gesicherten Sicherungsbügel und
- Fig. 7: einen Aufnahmebügel mit angelegter Sicherungsmanschette.

Ein Kippbehälter 1 mit einem Laderaum 2 weist auf jeder Seite zwei Aufnahmebolzen 3a, 3b auf. Weiter ist an einer Stirnseite des Absezkippbehälters 1 ein Haltebügel 4 befestigt, in den zum Kippen ein Haken des Transportfahrzeuges einschwenkbar ist. Auf den Aufnahmebolzen 3b ist eine Abdeckhaube 5a aufgeschoben, die mit einem Schloß 6 an einer Lasche 7, die an dem Absetz-Kippbehälter angeschweißt ist, gegen unbefugtes Entfernen gesichert ist.

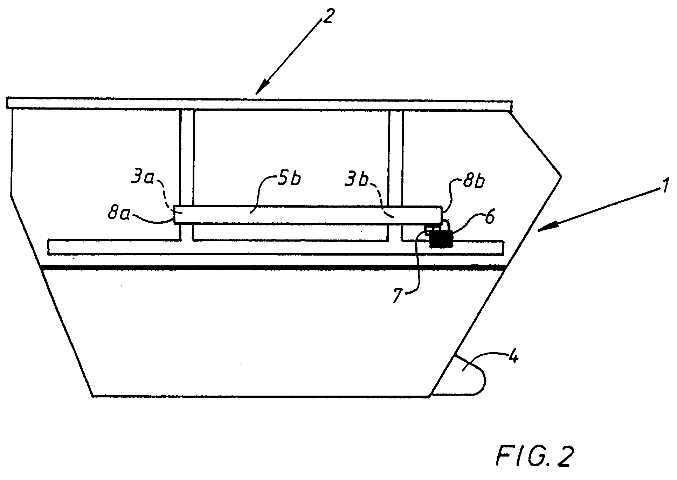

In Fig. 2 ist die Abdeckhaube 5b so ausgebildet, daß sie über beide Aufnahmebolzen 3a, 3b einer Behälterseite schiebbar ist. Gesichert ist sie ebenfalls mit einem Schloß 6, das mit der Lasche 7 zusammenwirkt. Alternativ zu der Befestigung bzw. Sicherung der Abdeckhaube 5a, 5b über die an dem Behälter angeschweißte Lasche 7 wäre es denkbar, die Stirnseite 8a der Abdeckhaube geschlossen auszubilden und die Stirnseite 8b mit einer Klappe zu versehen, die gegen unbefugtes Aufklappen mit einem Schloß sicherbar ist. Bei einer derartig ausgebildeten Abdeckhaube 5a, 5b brauchte an dem Absetz-Kippbehälter 1 keine Lasche 7 angebracht werden.

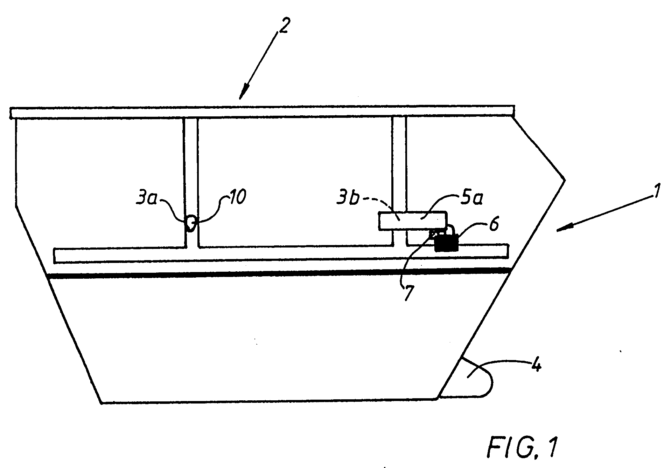

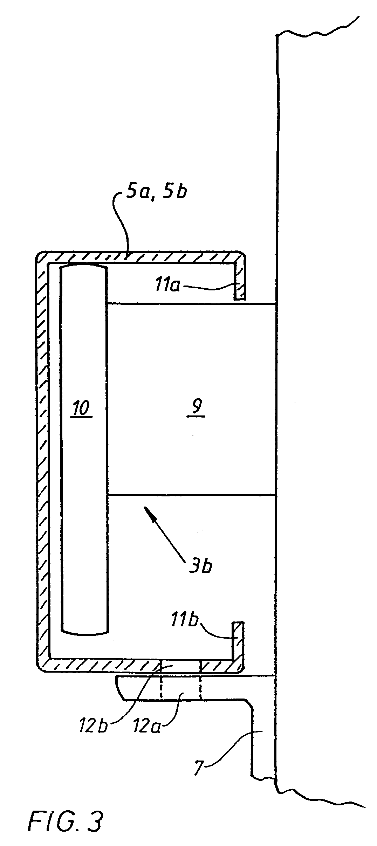

Der Aufnahmebolzen 3b gemäß Fig. 3 weist ein zylindrisches Teil 9 und ein angenähert oval geformtes (Fig. 1) Außenteil 10 auf. Die Abdeckhaube 5a, 5b ist im wesentlichen U-förmig ausgebildet und weist an den beiden Schenkeln nach innen gerichtete Fortsätze 11a, 11b auf. Die Fortsätze 11a, 11b verhindern, daß die Abdeckhaube 5a, 5b über das Außenteil 10 des Aufnahmebolzens 3a, 3b abgezogen werden kann. Die Lasche 7 weist eine Bohrung 12a auf, die mit einer Bohrung 12b in der Abdeckhaube 5a, 5b zusammenwirkt. Durch die Bohrung 12a, 12b wird ein Bügel des Schlosses 6 gesteckt, so daß ein seitliches Runterschieben der Abdeckhaube 5a, 5b von dem Aufnahmebolzen 3a, 3b ebenfalls ausgeschlossen ist.

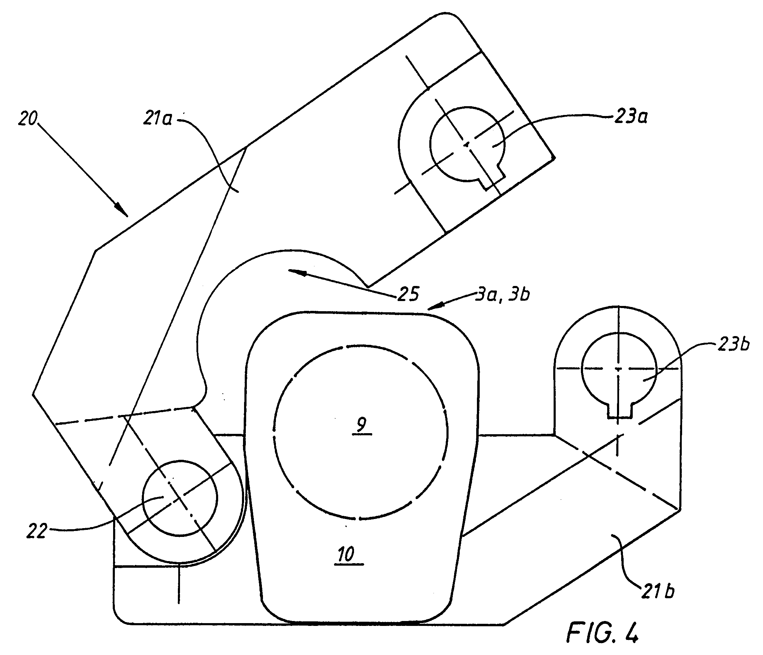

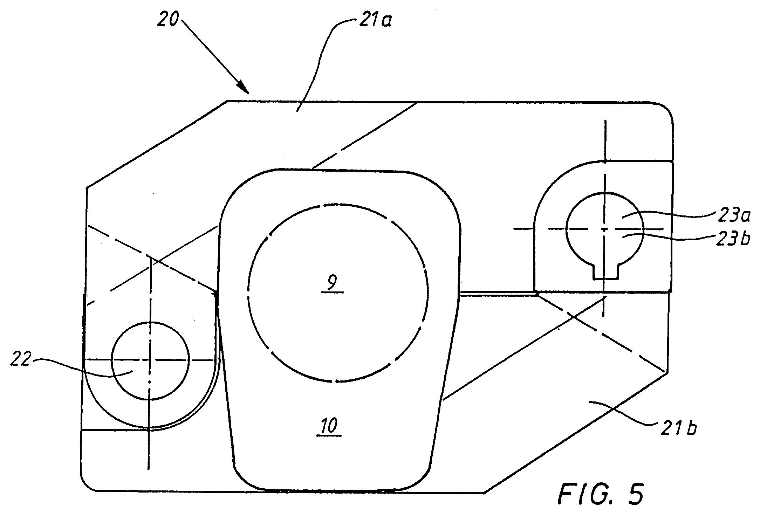

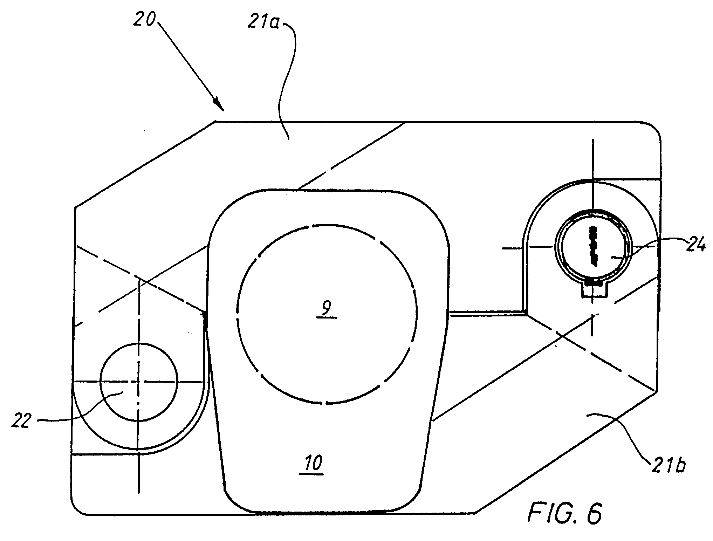

In dem in Fig. 4 dargestellten Ausführungsbeispiel wird ein Sicherungsbügel 20 um einen Aufnahmebolzen 3a, 3b geschwenkt. Der Sicherungsbügel weist zwei Schenkel 21a, 21b auf, die an einem Schenkelende mit einem Bolzen 22 bewegbar verbunden ist. Auf der gegenüberliegenden Seite der Schenkel 21a, 21b ist eine Ausnehmung 23a, 23b eingearbeitet, in die ein Steckschloß 24 (Fig. 6) einschiebbar ist. Die Schenkel 21a, 21b schließen eine kreisförmige Öffnung 25 ein, die bei zusammengeklappten Schenkeln 21a, 21b (Fig. 5) den zylindrischen Teil 9 des Aufnahmebolzens 3a, 3b umfassen.

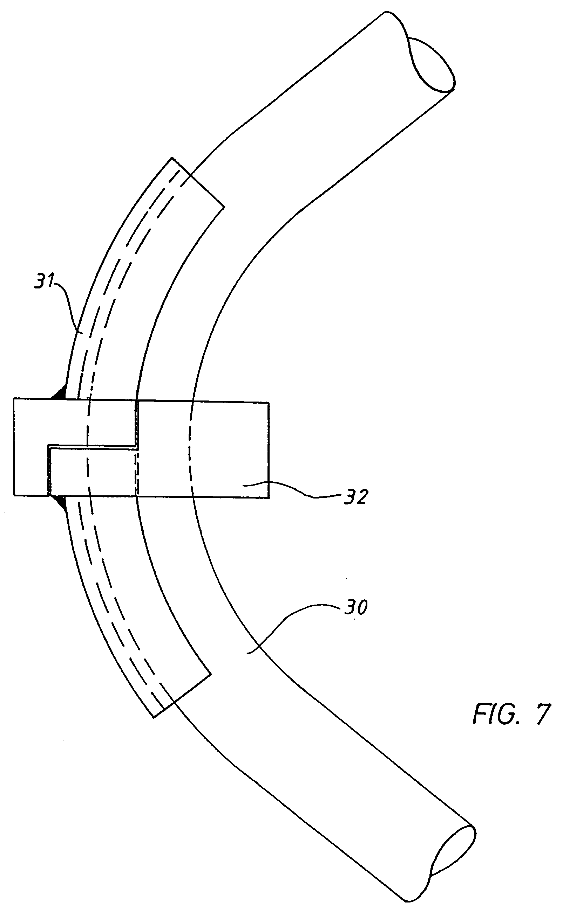

In dem Ausführungsbeispiel gemäß Fig. 7 ist um den Aufnahmebügel 30 eines Abrollbehälters eine Sicherungsmanschette 31 angeordnet. Die Sicherungsmanschette 31 ist der Kontur des Aufnahmebügels 30 angepaßt und mit einem schwenkbaren Befestigungsbügel 32 gegen unberechtigtes Entfernen der Sicherungsmanschette 31 gesichert. Die Sicherungsmanschette 31 ist so ausgebildet, daß ein Fang-/Zughaken nicht um den Aufnahmebügel 30 gelegt werden kann.

## Patentansprüche

1. Wechselbehälter mit einem Laderaum (2) und zumindest einer Vorrichtung zum Angreifen einer Aufnahmeeinrichtung,
**dadurch gekennzeichnet**, daß die Vorrichtung mit einer die Anbringung der Aufnahmeeinrichtung verhindernden Sperrvorrichtung versehen ist und daß die Sperrvorrichtung entfernbar ist.

2. Wechselbehälter nach Anspruch 1,
dadurch gekennzeichnet, daß die Sperrvorrichtung eine Abdeckhaube (5a, 5b) ist.

3. Wechselbehälter nach Anspruch 1,
dadurch gekennzeichnet, daß die Sperrvorrichtung ein Sicherungsbügel (20) ist.

4. Wechselbehälter nach Anspruch 1,
dadurch gekennzeichnet, daß die Sperrvorrichtung eine Sicherungsmanschette (31) ist.

5. Wechselbehälter nach einem der vorherigen Ansprüche,
dadurch gekennzeichnet, daß die Sperrvorrichtung als über eine als Aufnahmebolzen (3a, 3b) ausgebildete Vorrichtung eines als Absetz-Kippbehälters (1) ausgebildeten Wechselbehälters oder über die als Aufnahmebügel (30) ausgebildete Vorrichtung eines als Abrollbehälters ausgebildeten Wechselbehälters schiebbare Abdeckhaube (5a, 5b) ausgebildet ist.

6. Wechselbehälter nach einem der vorherigen Ansprüche,
dadurch gekennzeichnet, daß die Sperrvorrichtung als zumindest den zylindrischen Teil (9) des Aufnamebolzens (3a, 3b) umgreifender Sicherungsbügel (20) ausgebildet ist.

7. Wechselbehälter nach einem der vorherigen Ansprüche,
dadurch gekennzeichnet, daß der Sicherungsbügel (20) zwei eine zumindest angenähert kreisförmige Öffnung (25) einschließende Schenkel (21a, 21b) aufweist, die an jeweils einem Schenkelende bewegbar unlösbar verbunden und an den gegenüberliegenden Schenkelenden lösbar miteinander verbindbar sind.

8. Wechselbehälter nach einem der vorherigen Ansprüche,
dadurch gekennzeichnet, daß die lösbaren Schenkelenden mit einem Schloß verbindbar sind.

9. Wechselbehälter nach einem der vorherigen Ansprüche,
dadurch gekennzeichnet, daß die Sperrvorrichtung als an die Form der als Aufnahmebügel (30) ausgebildeten Vorrichtung des als Abrollbehälters ausgebildeten Wechselbehälters angepaßte Sicherungsmanschette (31) ausgebildet ist.

10. Wechselbehälter nach einem der vorherigen Ansprüche,
dadurch gekennzeichent, daß die Sicherungsmanschette (31) einen schenkbaren Befestigungsbügel (32) aufweist, der um den Aufnahmebügel (30) herumgreift.

11. Wechselbehälter nach einem der vorherigen Ansprüche,
dadurch gekennzeichnet, daß der Befestigungsbügel (32) mit einem Schloß sicherbar ist.

## Claims

1. An interchangeable container comprising a loading space (2) and at least one device for engaging a receiving means, characterised in that the device has a locking device preventing the receiving means from being attached, and the locking device is removable.

2. An interchangeable container according to claim 1, characterised in that the locking device is a cover (5a, 5b).

3. An interchangeable container according to claim 1, characterised in that the locking device is a securing clamp or the like (20).

4. An interchangeable container according to claim 1, characterised in that the locking device is a securing sleeve (31).

5. An interchangeable container according to any one of the preceding claims, characterised in that the locking device is in the form of a hood (5a, 5b) slidable over a device in the form of a receiving bolt (3a, 3b) on an interchangeable container in the form of a detachable tipping container (1) or over a device in the form of a receiving clamp (30) on an interchangeable container constructed as a transportable container.

6. An interchangeable container according to any one of the preceding claims, characterised in that the locking device is in the form of a securing clamp (20) surrounding at least the cylindrical part (9) of the receiving bolt (3a, 3b).

7. An interchangeable container according to any one of the preceding claims, characterised in that the securing bolt (20) has two arms (21a, 21b) enclosing an at least approximately circular opening (25) and movably and non-releasably connected at one end of each arm and releasably interconnectable at the opposite ends of the arms.

8. An interchangeable container according to any one of the preceding claims, characterised in that the releasable arm ends are connectable by a lock.

9. An interchangeable container according to any one of the preceding claims, characterised in that the locking device is in the form of a securing sleeve (31) adapted to the shape of the device in the form of a receiving clamp (30) on the interchangeable container in the form of a transportable container.

10. An interchangeable container according to any one of the preceding claims, characterised in that the securing sleeve (31) has a pivotable fastening clamp (32) which extends around the receiving clamp (30).

11. An interchangeable container according to any one of the preceding claims, characterised in that the fastening clamp (32) can be secured by a lock.

## Revendications

1. Benne interchangeable comportant un volume de chargement (2) et au moins un dispositif pour la mise en prise d'une installation de réception,
caractérisée en ce que le dispositif est muni d'un dispositif de blocage interdisant la mise en place de l'installation de réception et en ce que le dispositif de blocage est amovible.

2. Benne interchangeable selon la revendication 1, caractérisée en ce que le dispositif de blocage est un capuchon de recouvrement (5a, 5b).

3. Benne interchangeable selon la revendication 1, caractérisée en ce que le dispositif de blocage est un étrier de sécurité (20).

4. Benne interchangeable salon la revendication 1, caractérisée en ce que, le dispositif de blocage est un manchon de sécurité (31).

5. Benne interchangeable selon l'une des revendications précédentes, caractérisée en ce que le dispositif de blocage est un dispositif en forme de goujon de réception (3a, 3b) d'une benne interchangeable en forme de benne basculante (1) susceptible d'être déchargée ou d'un dispositif réalisé sous la forme d'un étrier de réception (30) d'un capot (5a, 5b) coulissant, d'une benne interchangeable réalisée sous forme de réceptacle roulant.

6. Benne interchangeable selon l'une des revendications précédentes, caractérisée en ce que le dispositif de blocage est constitué par au moins la partie cylindrique (9) de l'étrier de sécurité (20) qui entoure le goujon de protection (3a, 3b).

7. Benne interchangeable selon l'une des revendications précédentes, caractérisée en ce que l'étrier de sécurité (20) comporte deux branches (21a, 21b) en fermant une ouverture (25) au moins pratiquement circulaire, ces branches étant reliées chacune de manière inamovible, mobile à une extrémité de branche et en ce que les extrémités de branche opposées sont susceptibles d'être reliées l'une à l'autre.

8. Benne interchangeable selon l'une des revendications précédentes, caractérisée en ce que les extrémités de branche, amovibles peuvent être reliées par une serrure.

9. Benne interchangeable selon l'une des revendications précédentes, caractérisée en ce que le dispositif de blocage est un manchon de sécurité (31) adapté à la, forme du dispositif constitué par l'étrier de réception (30) du conteneur interchangeable en forme de conteneur roulant.

10. Benne interchangeable selon l'une des revendications précédentes, caractérisée en ce que le manchon de sécurité (31) comporte un étrier de fixation (32) pivotant, qui entoure l'étrier de réception (30).

11. Benne interchangeable selon l'une des revendications précédentes, caractérisée en ce que l'étrier de fixation (32) peut se protéger par une serrure.
